# FASCICULE DE BREVET EUROPEEN

(11) **EP 0 510 089 B1**
(45) Date de publication et mention de la délivrance du brevet: **24.04.1996**
(21) Numéro de dépôt: 91903138.5
(22) Date de dépôt: 03.01.1991
(51) Int. Cl.: F16L 55/165, E03F 3/06

(54) **PROCEDE POUR REVETIR INTERIEUREMENT UN CONDUIT VISITABLE**
VERFAHREN ZUR INNENAUSKLEIDUNG EINER BEGEHBAREN ROHRLEITUNG
METHOD FOR LINING THE INSIDE OF AN ACCESSIBLE PIPE

(30) Priorité: 10.01.1990 FR 9000219
(43) Date de publication de la demande: 28.10.1992
(73) Titulaire: HURNER S.A.R.L., F-93190 Livry-Gargan (FR)
(72) Inventeur: JORGJI, Bernard, F-93190 Livry-Gargan (FR); STEPHAN, Jean, F-77117 Guérard (FR)
(74) Mandataire: Keib, Gérard
(86) Numéro de dépôt international: FR9100003
(87) Numéro de publication internationale: WO9110862

(56) Documents cités:
- EP-A- 0 060 134
- WO-A-88/05884
- DE-A- 3 700 883

## Description

La présente invention concerne un procédé pour revêtir intérieurement, in situ, un conduit visitable préexistant, en vue notamment de rénover ce conduit lorsqu'il a été endommagé ou se révèle peu fiable, ou bien encore en vue d'améliorer ses caractéristiques : résistance à la pression, perte de charge, pertes thermiques, étanchéité, etc...

La présente invention concerne également une virole pour la mise en oeuvre de ce procédé.

Le procédé selon l'invention est applicable en particulier à un conduit souterrain ayant une section de dimensions relativement importantes, tel que certains conduits d'évacuation d'eaux usées industrielles ou certains collecteurs d'égout que l'on peut rencontrer dans de grandes agglomérations.

Un procédé consistant à revêtir intérieurement une canalisation préexistante en vue d'améliorer ses caractéristiques est connu d'après le FR-B- 2 600 749. Selon ce procédé, on introduit dans un tronçon de la canalisation à rénover un tube dont le diamètre extérieur est sensiblement inférieur au diamètre intérieur de ladite canalisation et dont la surface extérieure comporte des reliefs qui sont noyés dans une matière de remplissage formant liant que l'on injecte dans la région annulaire comprise entre le tube et la canalisation. En utilisant un liant expansif on obtient un excellent remplissage de l'espace annulaire et un très bon accrochage des reliefs dans le bloc annulaire que constitue le liant après sa prise, de telle sorte que les efforts produits par le fluide sous pression circulant dans le tube intérieur sont transmis dans de très bonnes conditions à la structure de la canalisation préexistante. On obtient de cette façon un bon accrochage du tube par sa surface extérieure, indépendamment du matériau utilisé pour ce tube, même si, comme cela est fréquent, on utilise une matière plastique ayant une adhérence faible à l'égard du liant.

Cependant, le procédé connu précité présente l'inconvénient de réduire sensiblement la section de passage du fluide transitant dans la canalisation et cela d'autant plus que la section de la canalisation préexistante a une forme qui s'éloigne de celle d'un cercle.

De plus, ce procédé nécessite de creuser de loin en loin des puits d'introduction du tube de gainage. Ces puits doivent avoir des dimensions horizontales relativement importantes. Il sont donc coûteux à réaliser et gênants pour les riverains et/ou la circulation pendant les travaux. Ces puits doivent en outre être maçonnés à la fin des travaux et un raccord de conduit doit être réalisé dans chacun d'eux.

Selon un autre procédé connu d'après le WO-A-88 05 884, on utilise comme éléments préfabriqués des feuilles que l'on courbe contre la paroi intérieure du conduit pour assembler l'un à l'autre deux bords axiaux opposés de chaque feuille. Les feuilles comportent des nervures en contre-dépouille, orientées dans le sens périphérique, qui s'appuient contre la paroi de manière à servir d'entretoises entre la paroi intérieure du conduit et la feuille. Un coulis est ensuite injecté entre la paroi intérieure du conduit et la feuille.

Le mode d'introduction des feuilles dans le conduit n'est pas précisé. Il semble s'agir de bandes dont la largeur est inférieure à celle des conduits et regards utilisables pour les acheminer, ce qui nécessite un grand nombre d'assemblages entre bandes successives le long du conduit. De plus, les nervures prévues sur les feuilles gênent la pénétration du coulis et sont incapables de reprendre les contraintes orientées périphériquement. Or de telles contraintes peuvent apparaître si la paroi des flancs du conduit subit de la flexion-compression vers l'intérieur du conduit, sous l'effet de la pression exercée par le terrain.

Par ailleurs, le EP - A - 0 060 134 décrit des éléments préfabriqués assemblés pour former une coque comportant des saillies ponctuelles. Ces éléments préfabriqués sont en général souples pour pouvoir être transportés sous forme de rouleaux. Ils sont disposés parallèlement à l'axe du conduit visitable à revêtir, ce qui exige des échafaudages de soutien et de maintien en place suivant le profil intérieur désiré. La mise en place de ce revêtement est donc longue et onéreuse.

Le but de l'invention est ainsi de proposer un procédé du genre indiqué au début qui soit plus efficace, plus facile et économique à mettre en oeuvre, et procure un meilleur renforcement du conduit préexistant.

L'invention a pour objet un procédé pour revêtir intérieurement un conduit visitable, et notamment un collecteur d'égout, dans lequel on recouvre une paroi intérieure du conduit visitable avec au moins une coque plastique faite d'éléments préfabriqués, que l'on assemble bord à bord et qui présentent, sur leur face que l'on oriente vers la paroi intérieure du conduit, une répartition de saillies qui définissent au moins une distance minimale entre la coque plastique et la paroi intérieure du conduit, et ont des faces en contre-dépouille, puis on injecte un coulis durcissable dans un espace compris entre la paroi et la coque. Ce procédé comprend en outre les étapes suivantes : on utilise comme éléments préfabriqués des éléments qui ont une âme en forme de voile élastiquement déformable et dont les saillies sont ponctuelles, on introduit les éléments préfabriqués à l'état courbé élastiquement dans le conduit de manière à réduire leur encombrement selon une direction transversale à l'axe du conduit, puis on laisse les éléments se déployer spontanément dans le conduit et on exploite leur élasticité pour contribuer à leur positionnement au moins approximatif face à la paroi intérieure du conduit, ces éléments préfabriqués étant des viroles que l'on introduit dans le conduit après les avoir courbées élastiquement en inversant le sens de courbure d'une partie de leur périphérie.

Les viroles donnent au conduit un périmètre final bien déterminé, ce qui permet de régler l'épaisseur de la couche de coulis qui sera interposée entre la paroi périphérique intérieure du conduit et la coque. De plus, les travaux d'assemblage dans le conduit sont moindres et plus aisés, et, les viroles ayant toutes même périmètre, l'étanchéité est plus facile à réaliser entre elles, par exemple par soudage.

Les saillies ponctuelles utilisées selon la présente invention ont le triple avantage de ne pas entraver la pénétration du coulis, de reprendre les contraintes orientées périphériquement et de n'opposer pratiquement aucune résistance au processus consistant à courber élastiquement les éléments pour les faire pénétrer dans le conduit par des accès exigus, ce qui permet d'introduire dans le conduit des éléments préfabriqués ayant, une fois en place, une dimension axiale relativement grande.

De préférence, par un choix convenable de la configuration des éléments à l'état détendu et/ou par contrainte initiale dans les éléments au repos, on fait en sorte que les éléments soient sous contrainte de flexion lorsqu'ils sont en place dans le conduit, ce qui accroît la résistance globale de l'ouvrage rénové.

D'autres particularités et avantages de l'invention ressortiront encore de la description ci-après d'exemples nor limitatifs.

Aux dessins annexés :
- la figure 1 est une vue en perspective d'un tronçon de conduit souterrain à rénover, dans la région d'un puits d'accès ;
- la figure 2 est une vue en perspective d'une feuille de plastique utilisée dans le procédé de l'invention ;
- la figure 3 est une vue en coupe en élévation à échelle agrandie de la feuille de la figure 2 ;
- la figure 4 est une vue en coupe transversale d'un conduit souterrain et d'un puits d'accès analogues à ceux de la figure 1 mais dans lequel on a adapté le puits d'accès pour permettre l'introduction d'un rouleau de feuille plastique de grandes dimensions ;
- la figure 5 est une vue en perspective d'un tronçon de conduit souterrain en cours de rénovation, avec des moyens de maintien des feuilles plastiques ;
- la figure 6 est une vue en coupe transversale à échelle agrandie du tronçon de la figure 5, au niveau du raccordement d'une canalisation de plus faibles dimensions ;
- la figure 7 est une vue en coupe longitudinale d'un tronçon du conduit de la figure 1, montrant de façon schématique l'introduction d'un coulis entre la feuille et la paroi du conduit par l'effet de la gravité ;
- la figure 8 est une vue analogue à la figure 7 mais dans laquelle on injecte le coulis sous pression ;
- la figure 9 est une coupe transversale d'un conduit muni d'une feuille de revêtement intérieur après introduction d'un coulis dans la moitié inférieure de l'espace annulaire délimité intérieurement par la feuille ;
- la figure 10 est une vue analogue à la figure 9 mais dans laquelle la totalité de l'espace annulaire est remplie de coulis et dans laquelle la demi-coupe de droite correspond à une variante présentant une espace annulaire élargi dans la région supérieure du conduit ;
- la figure 11 est une vue à plus grande échelle du détail XI de la figure 9 montrant le joint de raccordement de deux bords adjacents de la feuille de revêtement ;
- la figure 12 est une vue analogue à la figure 11 montrant une variante de joint ;
- la figure 13 est une vue schématique illustrant une étape de coupe à longueur de la feuille ;
- la figure 14 est une vue en perspective d'une virole ;
- la figure 15 est une vue analogue à la figure 1 mais relative à l'autre mode de mise en oeuvre du procédé ; et
- les figures 16 à 18 sont trois vues en coupe transversale du conduit, montrant trois étapes successives de la mise en place des viroles dans le conduit.

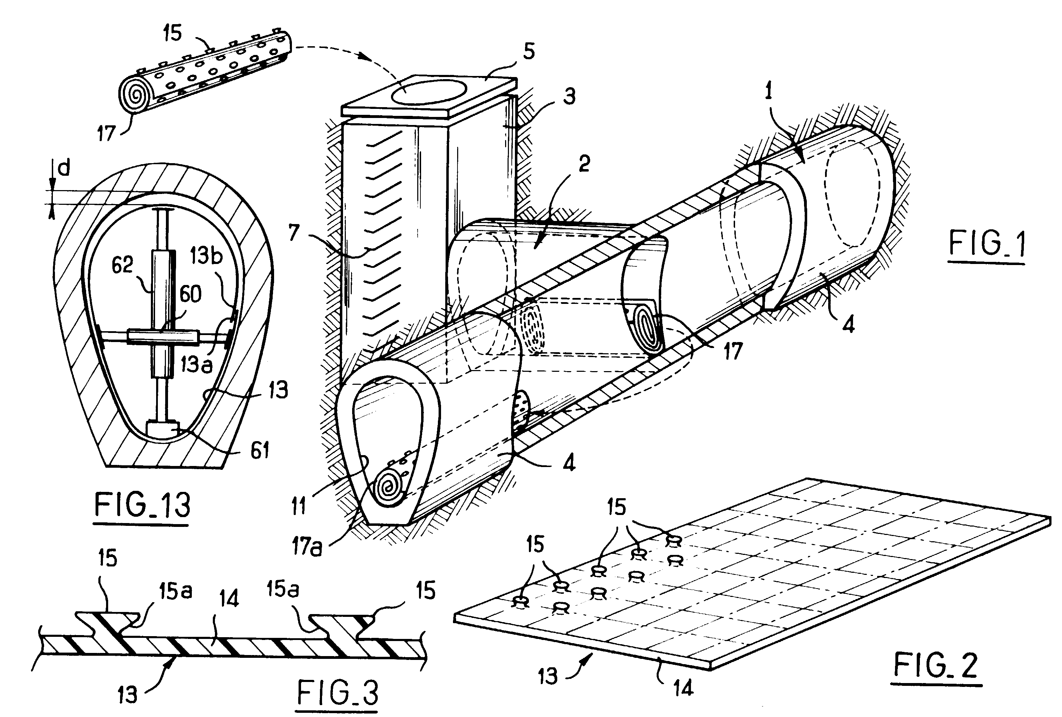

Un collecteur souterrain d'égout à rénover ou à conforter, dont seul un tronçon 1 est représenté, partiellement en coupe longitudinale, sur la figure 1, comprend un puits d'accès 3 dont la base est reliée au tronçon 1 par une galerie d'accès 2. A titre d'exemple, le puits d'accès 3 a une section transversale carrée d'environ un mètre carré, alors que le collecteur, qui s'étend sous le sol à une profondeur variable comprise entre deux mètres et douze mètres environ, est constitué de buses en béton de forme ovoïde 4. Le puits 3 est surmonté d'un regard équipé d'une plaque de fermeture 5 située au niveau d'une chaussée urbaine non représentée. Des barreaux d'échelle 7 permettent de descendre dans le puits et d'atteindre la galerie d'accès 2 puis le tronçon de collecteur 1.

Afin de rénover ou de conforter une paroi intérieure 11 du collecteur 1, on introduit dans le puits 3, après enlèvement de la plaque de regard 5, des éléments préfabriqués constitués par des feuilles plastiques souples 13 (voir figures 2 et 3). Ces feuilles sont munies, sur l'une de leurs deux faces, de saillies ou bossages sensiblement ponctuels, présentant des faces 15a en contre-dépouille et pouvant être formés d'une pièce avec une âme plate 14 de la feuille. A titre d'exemple, l'âme plate 14 peut avoir une épaisseur comprise entre trois et sept millimètres, les bossages ayant perpendiculairement au plan de l'âme plate une hauteur d'environ dix millimètres.

On utilise de préférence, selon l'invention, des feuilles plastiques 13 ayant une élasticité tendant à leur faire prendre la forme plane. Ces feuilles sont réalisées en un matériau polymère, de préférence une polyoléfine pouvant être, selon le cas, du polyéthylène haute densité, du polypropylène, du polyvinylidène fluoré, etc...

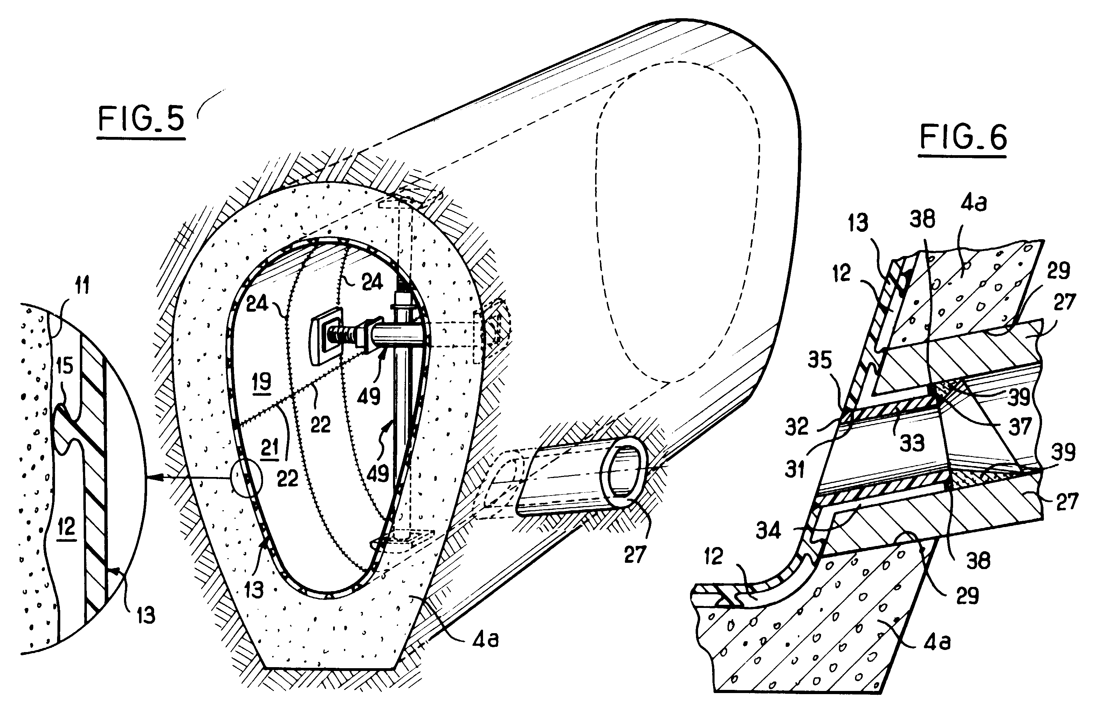

Les dimensions, en longueur et largeur, des feuilles utilisées dépendent de plusieurs paramètres. De préférence, l'une des deux dimensions est prise sensiblement égale à la valeur de la circonférence intérieure du conduit ou à un sous-multiple de cette valeur. Il faut aussi tenir compte de l'encombrement de chaque feuille et de la nécessité de pouvoir l'introduire sans difficulté excessive dans le puits 3 et la galerie d'accès 2 puis dans le tronçon de collecteur 1 (voir figures 1 et 4).

Pour amener les feuilles à pied d'oeuvre, il est préférable, notamment lorsqu'elles se présentent sous forme de bandes ou laizes, plus ou moins larges et plus ou moins longues, de les transporter à l'état de rouleaux 17, les saillies 15 étant dirigées radialement vers l'extérieur.

Une fois que le rouleau 17 est parvenu dans une position 17a située à proximité de la fraction de paroi intérieure 11 à recouvrir (voir figure 1), on l'oriente soit parallèlement à la direction axiale du conduit, soit perpendiculairement à cette direction, selon que la laize doit être appliquée circonférentiellement ou longitudinalement sur la paroi 11. Dans l'exemple représenté à la figure 1, on a placé le rouleau 17 (position 17c) de façon que son axe soit parallèle à l'axe du conduit. Puis on délie le rouleau 17 en laissant la feuille 13 se dérouler spontanément dans le conduit et on exploite l'élasticité de la feuille pour contribuer à son positionnement contre la paroi 11.

Lorsqu'on désire utiliser des rouleaux 17 de dimension axiale et/ou radiale relativement grande, on peut être amené à abattre un angle 3a à la jonction du puits 3 et de la galerie d'accès 2 (voir figure 4), quitte à reconstituer l'angle après les travaux de rénovation.

En prenant une feuille 13 ayant une longueur sensiblement égale à la valeur de la circonférence intérieure du conduit, on applique cette feuille contre la paroi intérieure du conduit de façon que les saillies 15 forment entretoises, et deux bords opposés de la feuille, 19 et 21, parallèles à la direction longitudinale du conduit, deviennent adjacents (voir figure 5). On relie entre eux les bords 19, 21 afin d'établir la continuité circonférentielle de la feuille et de constituer entre la feuille 13 et la paroi 11 un espace annulaire 12 d'épaisseur sensiblement constante.

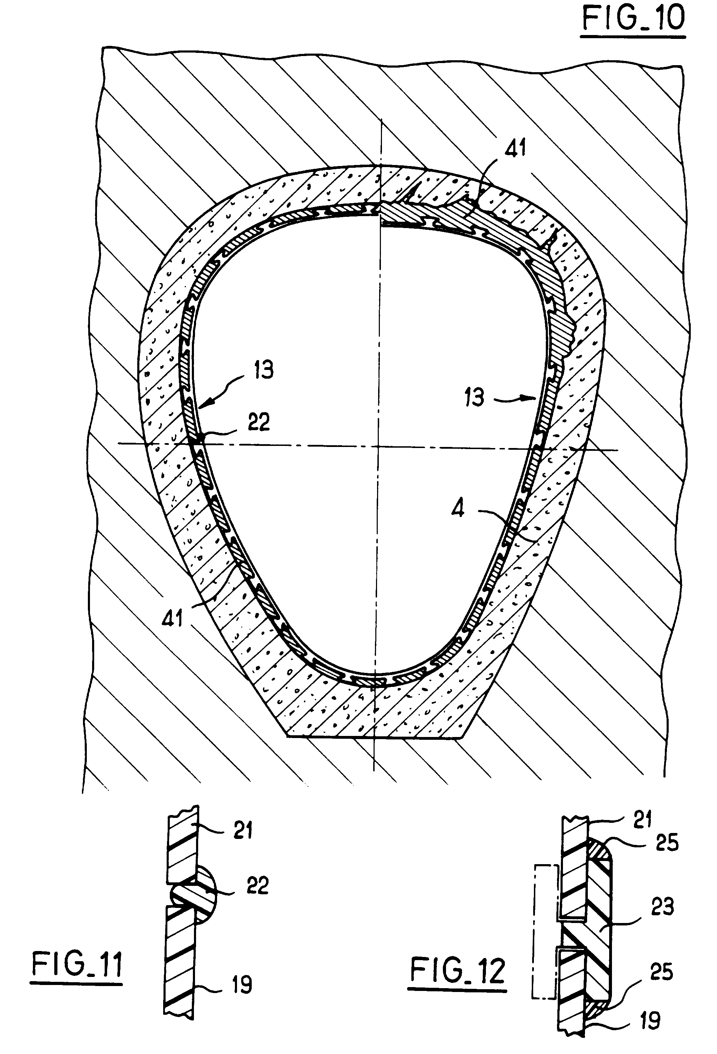

Pour cela, on procède à la soudure de ces deux bords, par exemple avec matière d'apport 22 (voir figure 11), ou sans matière d'apport selon le cas. On peut par exemple avoir recours au procédé de soudage par polyfusion. On peut aussi se limiter à quelques points de soudure et recouvrir la ligne de jonction d'un ruban adhésif assurant une bonne étanchéité. Selon une autre variante de jonction représentée sur la figure 12, on utilise un joint plastique 23 dont la section est en forme de T et que l'on soude aux bords 19 et 21. En variante représentée en trait mixte, le joint plastique peut avoir une section en forme de H. On applique ensuite une deuxième feuille 13 de façon que l'un de ses bords circonférentiels soit adjacent à l'un des bords circonférentiels de la feuille 13, et on soude les deux feuilles l'une à l'autre par un cordon de soudure 24 et ainsi de suite de proche en proche le long du conduit.

La buse 4a reçoit en service l'écoulement d'une canalisation 27 dont le raccordement est réalisé au moyen d'une ouverture 29 pratiquée dans la buse 4a. En outre, une ouverture 31 est pratiquée dans la feuille 13 en regard de l'ouverture 29 de la buse 4a. La jonction de la canalisation 27 est tapissée par un manchon en plastique 33 dont un premier bord 32 est soudé à la feuille 13 le long du pourtour de l'ouverture 31 par un cordon de soudure 35, de façon à laisser entre canalisation 27 et manchon 33 un espace annulaire 34 relié à l'espace annulaire 12. L'espace annulaire 34 est fermé le long d'un deuxième bord 37 du manchon 33 par un joint en caoutchouc ou mousse 38 avec évent de dégazage dans la partie supérieure (non représentée), cette jonction étant consolidée par un raccord annulaire en ciment - ou solin - 39 dont la forme tronconique permet de réduire les turbulences à l'entrée de l'écoulement dans le manchon.

L'espace annulaire 12 entre la paroi intérieure du conduit et la feuille 13, ainsi que le petit espace annulaire 34, sont destinés à être remplis d'un coulis 41, par exemple un coulis bentonitique ou un ciment renforcé de fibres de verre (G R C), dont la fonction est triple : accrochage sur la paroi interne 11, ancrage de la feuille 13 par les saillies en contre-dépouille 15, et consolidation de l'ouvrage.

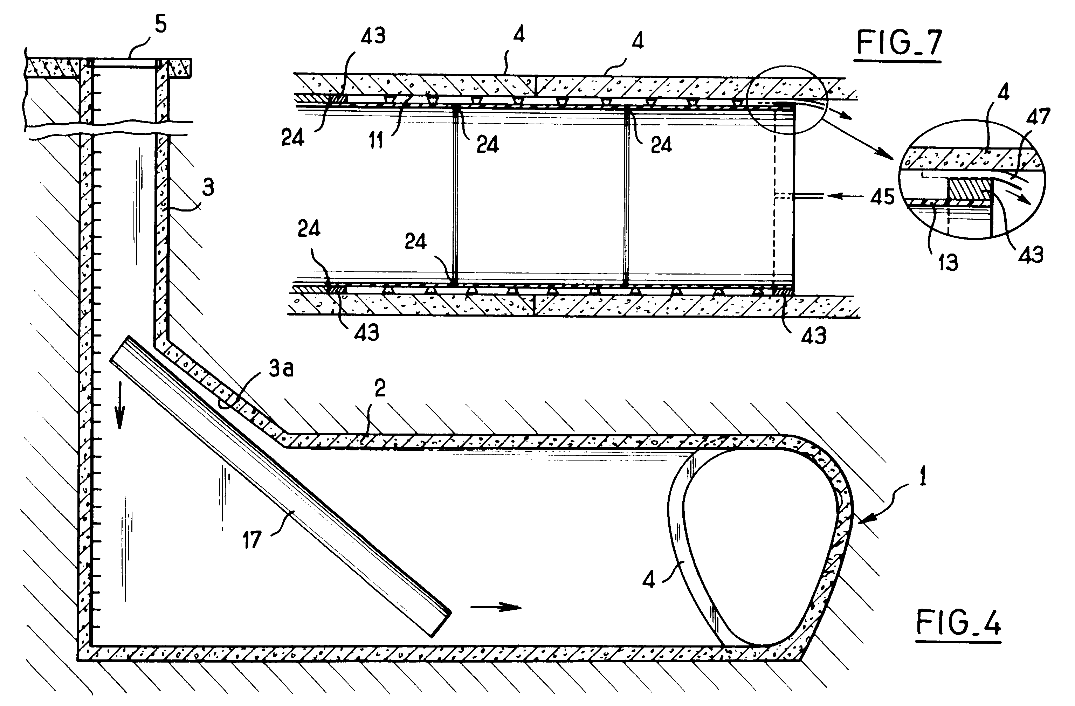

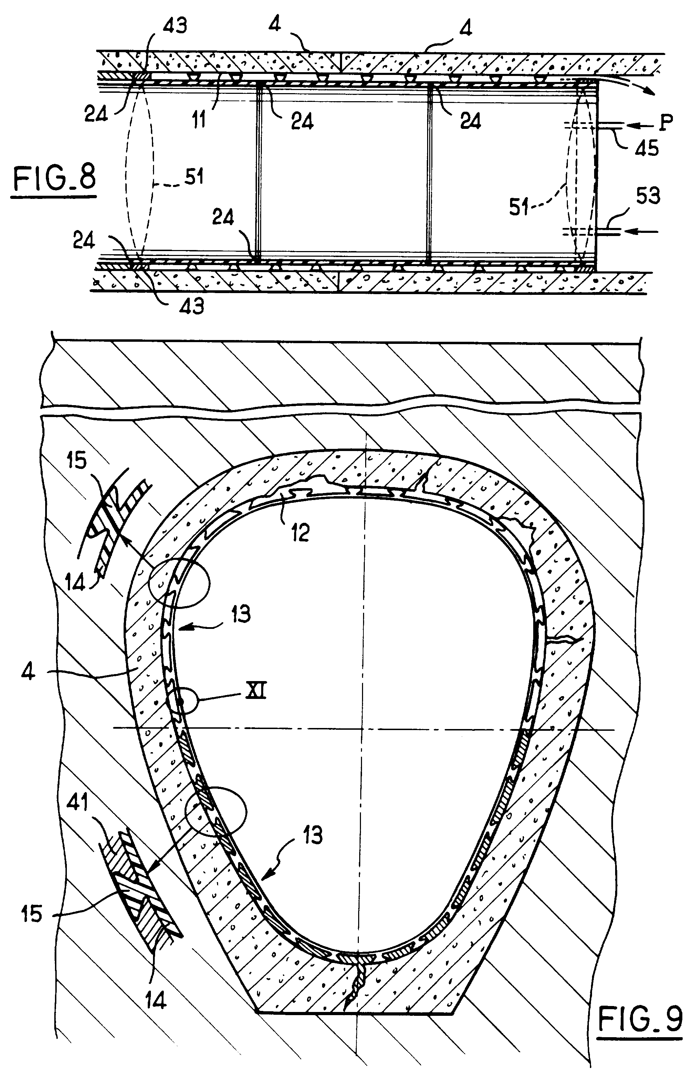

L'enceinte délimitant l'espace annulaire 12 comprend : la paroi interne 11 des buses 4 ; la face tournée vers cette paroi d'une feuille 13 ou de plusieurs de ces feuilles reliées de façon étanche par des cordons de soudure notamment tels que 24 ; des joints 43 (figures 7 et 8) en mastic apte à faire prise dans l'eau, ces joints étant disposés sur les bords circonférentiels d'extrémité d'une feuille 13 ou d'un ensemble de telles feuilles. Dans le cas d'une buse 4a, l'enceinte délimitant l'espace annulaire complémentaire 34 comprend en outre la face externe du manchon plastique 33 et le joint en caoutchouc 38.

Par une ou plusieurs feuilles 13, il faut entendre que l'enceinte peut être délimitée par une seule feuille 13 ayant comme dimension circonférentielle une dimension correspondant à celle du conduit et dont deux bords axiaux sont soudés ensemble, une seule feuille ne recouvrant par exemple que la région inférieure du conduit, plusieurs feuilles se succédant selon la direction circonférentielle du conduit et soudées bord à bord et/ou plusieurs feuilles se succédant dans le sens longitudinal du conduit.

L'injection du coulis 41 se fait à travers le joint 43 séparant l'espace 12 de la région non encore revêtue du conduit, par un injecteur 45 (figure 7), alors que l'air contenu dans l'espace annulaire 12, et éventuellement l'espace annulaire 34, peut s'échapper par un conduit 47 disposé près de la partie supérieure de la buse 4 et traversant le même joint 43. L'air contenu dans la partie haute de l'espace annulaire 34 peut en outre s'échapper par l'évent du joint 38.

Préalablement à l'injection du coulis 41, des étais de longueur réglable 49 peuvent être disposés dans la buse 4 afin de maintenir la feuille 13 dans la position prévue en appuyant sur des régions appropriées de cette feuille (voir figure 5). On peut également, comme représenté schématiquement sur la figure 8, créer une surpression pneumatique dans l'espace central des buses 4 au niveau de l'espace annulaire 12, grâce à des coussins pneumatiques d'extrémité formant bouchons 51 et à un injecteur pneumatique 53 relié à une installation d'air comprimé.

Pendant les travaux correspondant à une section du collecteur, on détourne l'effluent principal et seules quelques eaux résiduaires peuvent s'écouler dans l'espace annulaire entre la feuille plastique 13 et le fond du collecteur - ou cunette -. Pour permettre d'évacuer ce faible écoulement, un orifice non représenté est prévu dans un point bas du joint 43. Il n'est pas nécessaire de réaliser l'assèchement complet de l'espace annulaire 12 pour procéder à l'injection du coulis dans cet espace.

Selon l'invention, on commence de préférence par injecter le coulis 41, en utilisant la gravité des feuilles augmentée par celle d'un lest (non représenté), dans la moitié inférieure de cet espace (voir figures 7 et 9) alors que les feuilles 13 reposent par les saillies 15, notamment sous l'effet de l'élasticité propre des feuilles 13 et sous l'effet de gravité précité. Puis on donne au coulis le temps de faire prise complètement.

On procède ensuite au remplissage en coulis de la moitié supérieure de l'espace annulaire en opérant sous faible pression d'injection P (voir figures 8 et 10).

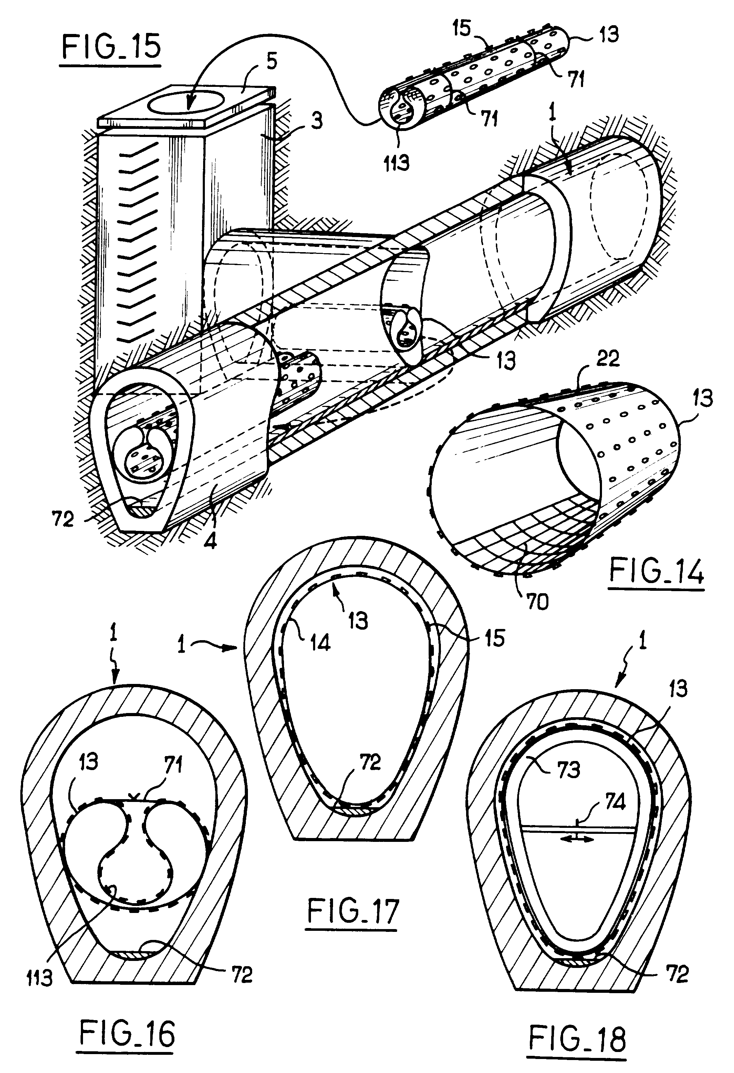

En général, la moitié supérieure des buses 4 est la plus dégradée, car elle subit davantage la pression du terrain. Si tel est le cas, il est possible, comme indiqué sur la demi-coupe de droite de la figure 10, d'y former un espace annulaire de plus grande épaisseur. Comme représenté à la figure 13, pour obtenir une valeur désirée de l'intervalle d entre feuille 13 et paroi 11 au sommet du conduit, on peut partir de feuilles 13 ayant une surdimension dans la direction circonférentielle du conduit, on plaque la feuille par ses saillies 15 (non représentées à la figure 13) contre la région inférieure du conduit au moyen d'une entretoise réglable horizontale 60 et d'un poids 61, on positionne à l'aide d'une seconde entretoise réglable, verticale, 62 le reste de la feuille à la distance voulue d de la région supérieure du conduit, et on coupe le long d'une ligne 13b la région de bord axiale 13a de la feuille qui recouvre l'autre région de bord, de façon que les deux bords de la feuille soient adjacents et qu'après soudure de ceux-ci la feuille ait exactement la dimension circonférentielle correspondant à l'écart voulu entre feuille et paroi. Ce procédé est utilisable même dans le cas où on désire que les saillies s'appuient sur toute la périphérie du conduit. Une fois rempli de coulis et après solidification de celui-ci, l'épaisseur supplémentaire obtenue permet de consolider la voûte du tronçon de conduit considéré. L'injection sous pression dans la région supérieure du conduit permet la pénétration du coulis dans les fissures de l'ouvrage existant.

Dans l'exemple représenté aux figures 14 à 18, on part d'une feuille 13 qui peut être identique à celle représentée à la figure 2 et on soude en atelier, c'est-à-dire avant introduction dans l'ouvrage à renforcer, deux bords opposés de la feuille 13 selon un cordon de soudure 22 de manière à conformer la feuille 13 en une virole cylindrique. On a prévu sur la face intérieure de la virole 13 une bande antidérapante 70 s'étendant axialement, destinée à être positionnée dans la région basse du conduit 1 pour faciliter la marche à pied dans le conduit rénové. Par ailleurs, la paroi intérieure 1 de la virole est au moins en majeure partie lisse pour favoriser l'écoulement et le curage spontané.

Avant de procéder à ce soudage, on a donné à la feuille 13, soit dès sa fabrication, soit par coupe à longueur, dans la direction destinée à constituer la direction périphérique de la virole, une dimension correspondant exactement au périmètre voulu pour la section de passage du conduit rénové. Ce réglage de la longueur périphérique de la virole peut également se faire en faisant plus ou moins se chevaucher les deux bords réunis par le cordon de soudure 22.

Ensuite, comme le montre le haut de la figure 15, on réalise un compactage radial de la virole 13 en inversant la courbure d'une région 113 de la périphérie de la virole 13 et en accroissant la courbure (en diminuant le rayon de courbure) de certaines autres régions de la virole 13, de façon que celle-ci prenne globalement le profil de deux "C" emboîtés l'un dans l'autre et réunis l'un à l'autre par leurs extrémités.

Pour maintenir la virole 13 dans cette configuration compacte et contrainte élastiquement, on l'entoure d'au moins un lien périphérique 71.

Ensuite, on introduit la virole 13 compactée dans le conduit 1 selon un processus sensiblement identique à celui décrit en référence à la figure 1.

Comme représenté aux figures 15 et 16, dans le conduit 1, la virole 13 compactée, compte-tenu de son encombrement radial tout de même plus important que celui du rouleau 17 de la figure 1, repose sur les flancs du conduit 1 plutôt que sur la région inférieure de celui-ci.

Préalablement à l'introduction de la virole 13 dans le conduit 1, on a formé à la base de celui-ci un solin plan 72 en matériau de maçonnerie.

L'étape suivante consiste à ôter les liens 71, ce qui permet à la virole 13 de se déployer spontanément dans le conduit 1 comme représenté à la figure 17 car elle tend à reprendre élastiquement sa forme cylindrique représentée à la figure 14.

De préférence, la longueur périphérique de la virole 13 a été choisie de façon que ses saillies 15 ne puissent pas s'appuyer toutes sur la paroi intérieure du conduit. Par exemple, si la hauteur des saillies 15 est de 15mm, on choisit la longueur périphérique de la virole 13 de manière à permettre la réalisation d'un intervalle de 3cm entre le voile continu 14 constituant l'âme de la virole 13 et la paroi intérieure du conduit.

Par conséquent, comme représenté à la figure 17, lorsqu'elle se déploie librement dans le conduit, la virole 13 s'appuie principalement sur le solin 72 et sur les flancs du conduit 1.

Ensuite, comme représenté à la figure 18, on place à l'intérieur de la virole 13 un gabarit 73 dont le profil extérieur a la même longueur périphérique que la virole 13 et une forme correspondant sensiblement à celle de la paroi intérieure du conduit 1. L'ensemble formé par la virole 13 et le gabarit 73 repose sur le solin 72. Le gabarit 73 porte un repère de visée central 74 qui permet, au moyen d'un dispositif de visée laser non représenté, de centrer le gabarit 73 et la virole 13 dans le conduit 1 de manière que l'intervalle périphérique entre la voile 14 et la paroi intérieure du conduit soit régulièrement réparti tout autour de la virole 13.

Alternativement, on peut désirer au contraire que l'intervalle précité soit plus grand d'un côté que de l'autre pour davantage renforcer un côté plus dégradé et/ou soumis à des pressions plus importantes. Le repère 74 permet de régler le décalage souhaité. Il suffit pour cela de le décaler de manière correspondante vers la gauche ou vers la droite avant de procéder à la visée.

Avant de procéder à l'injection de coulis, on peut encore renforcer le soutien de la virole 13 en plaçant à l'intérieur de celle-ci une structure gonflable.

Ensuite on procède à l'injection de coulis, entre la virole 13 et la paroi intérieure du conduit, par exemple de la manière décrite précédemment.

Ce deuxième mode de mise en oeuvre du procédé a l'avantage de minimiser les opérations à réaliser à l'intérieur du conduit. Il permet de plus de réaliser des viroles successives ayant toutes le même périmètre et s'alignant parfaitement les unes avec les autres dans le conduit. Il permet enfin, plus facilement que le mode de réalisation précédent, de ménager tout autour de la virole, entre celle-ci et la paroi intérieure du conduit, un intervalle nettement supérieur à la dimension correspondante des saillies.

Comme coulis, on adopte de préférence, dans tous les modes de réalisation, un coulis tel qu'une bentonite, ayant un module d'élasticité beaucoup plus grand que les feuilles plastiques de manière que celles-ci soient peu sollicitées et puissent ainsi avoir une grande longévité.

Bien entendu, l'invention n'est pas limitée aux exemples décrits et représentés.

En particulier, en fonction du périmètre intérieur du conduit à rénover, la forme que peut prendre l'élément préfabriqué à l'état compacté peut varier.

On peut également injecter le coulis en une seule opération depuis la région haute de l'intervalle entre la coque et la paroi intérieure du conduit.

Il y a lieu toutefois de préciser que les figures 1, 4 et 13 et les passages correspondants de la présente description sont relatifs à des modes de réalisation qui étaient connus à la date du dépôt de la présente demande et qui ne sont pas couverts par les revendications ci-après.

## Revendications

1. Procédé pour revêtir intérieurement un conduit visitable (1), et notamment un collecteur d'égout, dans lequel on recouvre une paroi intérieure du conduit visitable avec au moins une coque plastique faite d'éléments préfabriqués que l'on assemble bord à bord et qui présentent, sur leur face que l'on oriente vers la paroi intérieure (11) du conduit (1), une répartition de saillies (15) qui définissent au moins une distance minimale entre la coque plastique et la paroi intérieure du conduit, et ont des faces (15a) en contre-dépouille, puis on injecte un coulis durcissable (41) dans un espace (12) compris entre la paroi et la coque, ce procédé comprenant en outre les étapes suivantes : on utilise comme éléments préfabriqués des éléments (13) qui ont une âme en forme de voile (14) élastiquement déformable et dont les saillies sont ponctuelles, on introduit les éléments préfabriqués à l'état courbé élastiquement (17) dans le conduit de manière à réduire leur encombrement selon une direction transversale à l'axe du conduit, puis on laisse les éléments se déployer spontanément dans le conduit (1) et on exploite leur élasticité pour contribuer à leur positionnement au moins approximatif face à la paroi intérieure du conduit, ces éléments préfabriqués étant des viroles (13) que l'on introduit dans le conduit après les avoir courbées élastiquement en inversant le sens de courbure d'une partie (113) de leur périphérie.

2. Procédé conforme à la revendication 1, caractérisé en ce que l'injection du coulis durcissable (41) comprend les phases successives suivantes :
- on réalise une première injection de coulis (41) par effet de la gravité, dans un espace (12) correspondant à une région inférieure du conduit (1) ;
- on attend que ce coulis (41) soit sensiblement complètement durci ;
- et on réalise une deuxième injection de coulis (41) dans l'espace restant.

3. Procédé conforme à la revendication 2, caractérisé en ce qu'on réalise la deuxième injection de coulis (41) sous pression.

4. Procédé conforme à la revendication 1, caractérisé en ce qu'on applique contre une région inférieure de la paroi intérieure (11) du conduit (1), certaines au moins des saillies (15) situées en regard de cette région.

5. Procédé conforme à la revendication 4, caractérisé en ce qu'on applique contre au moins une moitié inférieure de la paroi intérieure (11) du conduit (1) certaines au moins des saillies (15) situées en regard de cette moitié.

6. Procédé conforme à l'une des revendications 1 à 5, caractérisé en ce qu'on réalise les viroles à l'extérieur du conduit en soudant ensemble deux bords opposés de feuilles plastiques ayant, dans la direction correspondant à la direction périphérique de la virole, une dimension prédéterminée choisie en fonction de la section de passage voulue pour le conduit.

7. Procédé conforme à l'une des revendications 1 à 6, caractérisé en ce qu'on utilise des viroles ayant dans la direction périphérique de la virole, une dimension prédéterminée choisie, de façon que l'intervalle entre la virole et la paroi périphérique intérieure du conduit soit supérieur à la dimension correspondante des saillies (15).

8. Procédé conforme à l'une des revendications 1 à 7, caractérisé en ce que après déploiement de la virole dans le conduit, on place à l'intérieur de la virole un gabarit (73) soutenant la virole (13) selon un profil périphérique déterminé pendant l'injection de coulis.

9. Procédé conforme à l'une des revendications 1 à 8, caractérisé en ce que avant d'introduire chaque virole on forme à l'emplacement qui lui est destiné, à la base du conduit, un solin (72) sur lequel reposera la virole.

10. Procédé conforme à l'une des revendications 1 à 9, caractérisé en ce qu'on recourbe élastiquement les viroles de manière à leur donner le profil de deux "C" emboîtés l'un dans l'autre et réunis par leurs extrémités.

11. Procédé conforme à l'une des revendications 1 à 10, caractérisé en ce que les viroles, lorsqu'on les introduit dans le conduit, ont une région antidérapante (70) s'étendant axialement que l'on place dans la région basse de l'ouvrage.

## Patentansprüche

1. Verfahren zur Innenauskleidung einer begehbaren Hohlleitung (1) und insbesondere einer Hauptkanalisation, in welchem eine Innenfläche der begehbaren Hohlleitung mit mindestens einer Plastikschalung aus vorgefertigten Elementen versehen wird, die Kante an Kante nebeneinandergesetzt werden und auf der Seite, die zur Innenfläche (11) der Hohlleitung (1) ausgerichtet wird, verteilte Vorsprünge (15) aufweisen, die wenigstens einen Minimalabstand zwischen der Plastikschalung und der Innenfläche der Hohlleitung definieren und hinterschnittene Flächen (15a) aufweisen, worauf eine härtbare Masse (41) in einen Raum (12) zwischen der Innenfläche und der Schalung eingespritzt wird, wobei das Verfahren darüber hinaus die folgenden Schritte umfaßt : als vorgefertigte Elemente werden Elemente (13) verwendet, die einen elastisch verformbaren plattenförmigen Grundkörper (14) mit punktförmigen Vorsprüngen aufweisen, die vorgefertigen Elemente werden in derart elastisch gebogenem Zustand (17) in die Hohlleitung eingeführt, daß ihr Platzbedarf in einer Richtung quer zur Achse der Hohlleitung verringert ist, dann läßt man die Elemente sich von selbst in der Hohlleitung (1) entfalten und ihre Elastizität wird ausgenutzt, um wenigstens annähernd zu ihrer Positionierung hinsichtlich der Innenfläche der Hohlleitung beizutragen, wobei die vorgefertigen Elemente Ringe (13) sind, die in die Hohlleitung eingeführt werden, nachdem sie durch Umkehren der Krümmungsrichtung eines Teiles (113) ihres umfanges elastisch gebogen wurden.

2. Verfahren nach Anspruch 1, dadurch gekennzeichnet, daß das Einspritzen der härtbaren Masse (41) die folgenden aufeinanderfolgenden Abschnitte umfaßt:
- ein erstes Einspritzen von Masse (41) mittels Schwerkraftwirkung erfolgt in einen Raum (12), der einem unteren Bereich der Hohlleitung (1) entspricht,
- es wird gewartet, bis diese Masse (41) deutlich vollständig ausgehärtet ist und
- ein zweites Einspritzen von Masse (41) in den verbleibenden Raum wird vorgenommen.

3. Verfahren nach Anspruch 2, dadurch gekennzeichnet, daß das zweite Einspritzen von Masse (41) unter Druck vorgenommen wird.

4. Verfahren nach Anspruch 1, dadurch gekennzeichnet, daß wenigstens einige der Vorsprünge (15), die an einen unteren Bereich der Innenfläche (11) der Hohlleitung (1) angesetzt sind, gegenüber diesem Bereich angeordnet werden.

5. Verfahren nach Anspruch 4, dadurch gekennzeichnet, daß wenigstens einige der Vorsprünge (15), die an wenigstens eine untere Hälfte der Innenfläche (11) der Hohlleitung (1) angesetzt sind, gegenüber dieser Hälfte angeordnet werden.

6. Verfahren nach einem der Ansprüche 1 bis 5, dadurch gekennzeichnet, daß die Ringe außerhalb der Hohlleitung hergestellt werden, indem zwei gegenüberliegende Kanten von Plastikplatten miteinander verschmolzen werden, wobei die Plastikplatten in der der Umfangsrichtung des Ringes entsprechenden Richtung eine vorbestimmte Abmessung haben, die abhängig von dem für die Hohlleitung gewollten Durchlaßquerschnitt ausgewählt wird.

7. Verfahren nach einem der Ansprüche 1 bis 6, dadurch gekennzeichnet, daß Ringe verwendet werden, die in der Umfangsrichtung des Ringes eine derart vorbestimmte ausgewählte Abmessung aufweisen, daß der Abstand zwischen dem Ring und der Umfangsinnenfläche der Hohlleitung größer ist als die entsprechende Abmessung der Vorsprünge (15).

8. Verfahren nach einem der Ansprüche 1 bis 7, dadurch gekennzeichnet, daß nach dem Entfalten des Ringes in der Hohlleitung im Inneren des Ringes eine Vorrichtung (73) angeordnet wird, die den Ring (13) während dem Einspritzen der Masse gemäß einem vorbestimmten Umfangsprofil abstützt.

9. Verfahren nach einem der Ansprüche 1 bis 8, dadurch gekennzeichnet, daß vor dem Einführen eines Ringes an der ihm zugewiesenen Stelle auf dem Grund der Hohlleitung eine Verwahrung (72) ausgebildet wird, auf welcher der Ring aufliegt.

10. Verfahren nach einem der Ansprüche 1 bis 9, dadurch gekennzeichnet, daß die Ringe derart elastisch gebogen werden, daß sie den Querschnitt von zwei ineinandergelegten _{"}C" haben, deren Enden miteinander verbunden sind.

11. Verfahren nach einem der Ansprüche 1 bis 10, dadurch gekennzeichnet, daß die Ringe einen sich axial erstreckenden rutschfesten Bereich (70) aufweisen, der beim Einführen der Ringe in die Hohlleitung im unteren Bereich des Bauwerkes angeordnet wird.

## Claims

1. A method of internally lining an inspectable duct (1), inter alia a main sewer, wherein an inner wall of the inspectable duct is covered by at least one plastics body made up of prefabricated components which are fitted edge to edge and which, along their surface facing the inner wall (11) of the duct (1), have projections (15) which are distributed and define at least a minimum distance between the plastics body and the inner wall of the duct and have undercut surfaces (15a), after which a hardenable grout (41) is injected into a space (12) between the wall and the body, the method also comprising the following stages: the prefabricated components (13) have a core in the form of an elastically deformable shell (14) and with projections at points, the prefabricated components are inserted in an elastically curved state (17) into the duct so as to reduce their bulk in a direction at right angles to the axis of the duct, after which the components are allowed to spread spontaneously in the duct (1) and their elasticity is used for positioning them at least approximately opposite the inner wall of the duct, the prefabricated components being hoops (13) which are inserted into the duct after elastically bending them by reversing the direction of curvature of a part (113) of their periphery.

2. A method according to claim 1, characterised in that the injection of the hardenable grout (41) comprises the following successive stages:
- a first injection of grout (41) is made by gravity, into a space (12) corresponding to a lower region of the duct (1);
- the grout (41) is left till it has substantially completely hardened, and
- a second injection of grout (41) is made into the remaining space.

3. A method according to claim 2, characterised in that the second injection of grout (41) is made under pressure.

4. A method according to claim 1, characterised in that at least some of the projections (15) facing a lower region of the inner wall (11) of the duct (1) are pressed against that region.

5. A method according to claim 4, characterised in that at least some of the projections (15) facing at least a bottom half of the inner wall (11) of the duct (1) are pressed against that half.

6. A method according to any of claims 1 to 5, characterised in that the hoops on the outside of the duct are constructed by welding together two opposite edges of plastics sheets which, in the direction corresponding to the peripheral direction of the hoop, have a predetermined dimension chosen in dependence on the desired flow section of the duct.

7. A method according to any of claims 1 to 6, characterised in that use is made of hoops which in the peripheral direction of the hoop have a predetermined dimension so chosen that the space between the hoop and the inner peripheral wall of the duct is greater than the corresponding dimension of the projections (15).

8. A method according to any of claims 1 to 7, characterised in that after the hoop has spread out in the duct, a template (73) is placed inside the hoop (13) so as to support it and give it a predetermined peripheral profile during the injection of grout.

9. A method according to any of claims 1 to 8, characterised in that before inserting each hoop, a bedding (72) on which the hoop will rest is formed at the base of the duct at the place intended for the hoop,

10. A method according to any of claims 1 to 9, characterised in that the hoops are elastically bent so as to give them the shape of two "C"s fitted into one another and joined by their ends.

11. A method according to any of claims 1 to 10, characterised in that the hoops, when inserted into the duct, have a non-slip region (70) extending axially and placed in the bottom region of the structure.
